# EUROPÄISCHE PATENTSCHRIFT

(11) **EP 2 152 561 B1**
(45) Veröffentlichungstag und Bekanntmachung des Hinweises auf die Patenterteilung: **02.03.2011**
(21) Anmeldenummer: 08749472.0
(22) Anmeldetag: 16.05.2008
(51) Int. Cl.: B61K 9/00

(54) **VORRICHTUNG UND VERFAHREN ZUR FEHLERÜBERWACHUNG VON FAHRWERKSKOMPONENTEN VON SCHIENENFAHRZEUGEN**
DEVICE AND METHOD FOR ERROR MONITORING FOR UNDERCARRIAGE COMPONENTS OF RAIL VEHICLES
DISPOSITIF ET PROCÉDÉ DE DÉTECTION DE DÉFAILLANCES DE COMPOSANTS DU CHÂSSIS DE VÉHICULES FERROVIAIRES

(30) Priorität: 22.05.2007 DE 102007024065
(43) Veröffentlichungstag der Anmeldung: 17.02.2010
(73) Patentinhaber: KNORR-BREMSE Systeme für Schienenfahrzeuge GmbH, 80809 München (DE)
(72) Erfinder: BURKHART, Thomas, 80469 München (DE); FRIESEN, Ulf, 85579 Neubiberg (DE)
(74) Vertreter: Schönmann, Kurt
(86) Internationale Anmeldenummer: PCT/EP2008/003954
(87) Internationale Veröffentlichungsnummer: WO 2008/141775

(56) Entgegenhaltungen:
- EP-A- 0 461 628
- DE-A1-102005 002 239
- DE-C1- 19 953 677
- DE-T2- 60 002 450

## Beschreibung

### Stand der Technik

Die Erfindung geht aus von einem Fahrwerk eines Schienenfahrzeugs mit einer Vorrichtung zur Fehlerüberwachung von Fahrwerkskomponenten gemäß Anspruch 1 sowie von einem Verfahren zur Fehlerüberwachung von Fahrwerkskomponenten von Schienenfahrzeugen gemäß Anspruch 15.

Im Schienenfahrzeugverkehr gewinnen Überwachungssysteme für Fahrwerke immer mehr an Bedeutung. Zum einen werden diese Überwachungssysteme aus Sicherheitsgründen normativ bzw. in Richtlinien gefordert. Als Beispiele sind hier folgende Systeme angeführt, die von Seiten der TSI (Technische Spezifikation für die Interoperabilität - Amtsblatt der Europäischen Gemeinschaft) für Hochgeschwindigkeitszüge europaweit gefordert werden:
- On-Board-Systeme zur Entgleisungsdetektion,
- On-Board-Systeme zur Heißläuferdetektion bzw. zur Lagerschadenerkennung,
- On-Board-Systeme zur Instabilitätserkennung bzw. von defekten Dämpfern.

Zum anderen erfolgt der Einsatz von Fahrwerksüberwachungssystemen zur Diagnose und Früherkennung von schadhaften Bauteilen, kritischen Zuständen bzw. sonstigen Fehlern, um eine frühzeitige und zustandsorientierte Wartung zu erreichen. Ziele sind dabei geringere Stillstandszeiten, eine bessere Ausnutzung von Bauteilen und damit eine Einsparung von Kosten.

So wird z.B. im ICE ein System zur Erkennung von instabilem Lauf eingesetzt und in neueren automatisch fahrenden Metros kommt ein System zur Entgleisungsdetektion zur Anwendung. Diesen Systemen ist gemeinsam, dass sie funktional für sich allein aufgebaut sind und wirken. Jedes dieser Systeme benutzt eigene Sensoren.

Für die Instabilitätserkennung werden üblicherweise ein oder mehrere Sensoren am Drehgestellrahmen montiert, welche die Querbeschleunigung (quer zur Fahrtrichtung x) in einem bestimmten Frequenzbereich messen und beim Überschreiten von Grenzwerten eine Alarmmeldung generieren.

In der DE 101 45 433 C2 und EP 1 317 369 werden ein Verfahren und eine Vorrichtung zur Fehlerüberwachung von Komponenten eines Schienenfahrzeugs beschrieben, welche ebenfalls auf der Messung von Beschleunigungswerten beruhen, die an am Wagenkasten befestigten Schlingerdämpferkonsolen angebracht sind. Die Detektierrichtung der Beschleunigungsaufnehmer ist dort parallel zur Fahrtrichtung.

Ein Beispiel für ein Verfahren und eine Vorrichtung zur Entgleisungsdetektion wird in der DE 199 53 677 beschrieben. Hierbei werden Messsignale eines an einem Achslager angeordneten Beschleunigungssensors direkt auswertet. Die gemessenen Beschleunigungswerte werden zweimal integriert und mit einem Grenzwert verglichen. Der einfache Beschleunigungssensor weist eine in Richtung der Hochachse (z-Richtung) des Schienenfahrzeugs verlaufende Detektionsrichtung auf. Gemäß der Schrift können aber auch Beschleunigungssensoren verwendet werden, welche Detektionsrichtungen in Fahrtrichtung (x-Richtung), quer zur Fahrtrichtung (y-Richtung) und in Richtung der Hochachse (z-Richtung) gleichzeitig aufweisen. Bei einem solchen Beschleunigungsaufnehmer handelt es sich um einen sog. Mehrfachaufnehmer, d.h. er besteht eigentlich aus wenigstens zwei, hier drei Beschleunigungsaufnehmern, von welchen jeder in einer Detektionsrichtung misst.

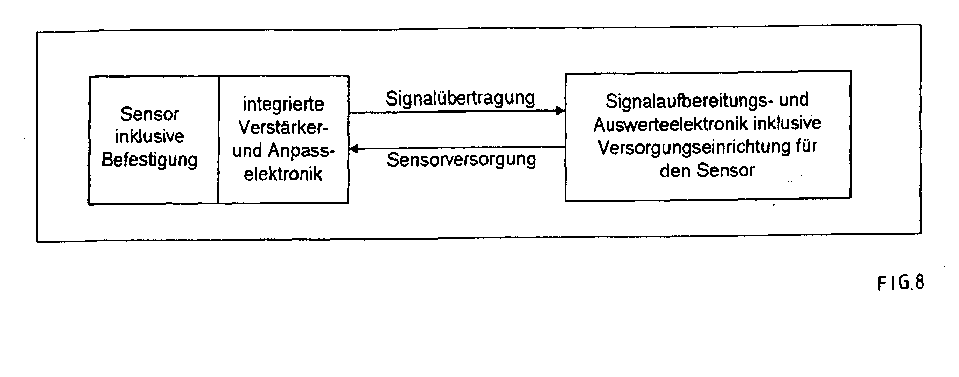

Die Problematik bei diesen sicherheitsrelevanten Überwachungseinrichtungen ist die Sicherstellung der Funktionstüchtigkeit der Beschleunigungssensoren, welche je nach Sicherheitslevel mit einer sehr hohen Ausfallsicherheit bzw. Ausfallerkennung zu garantieren ist. In Fig.8 sind schematisch der Aufbau und die Funktion einer Vorrichtung zur Fehlerüberwachung von Fahrwerkskomponenten von Schienenfahrzeugen dargestellt, welches folgendes umfasst:
- Einen Beschleunigungssensor inklusive Befestigung und integrierter Verstärker- und Anpasselektronik,
- eine Signalaufbereitungs- und Auswerteelektronik inklusive Versorgungseinrichtung für den Beschleunigungssensor,
- Übertragungsleitungen zur Signalübertragung der Signale des Beschleunigungssensors zur Auswertelektronik,
- Übertragungsleitungen zur Stromversorgung des Beschleunigungssensors.

Manche Komponenten der in Fig.8 gezeigten Messkette können im Betrieb durch Testfunktionen oder Schaltungen auf ihre Funktionsfähigkeit getestet werden. So kann zum Beispiel ein Abriss der Übertragungsleitung dadurch detektiert werden, dass eine Offsetspannung (Mittenspannung) eingespeist oder der Beschleunigungssensor durch einen konstanten Strom gespeist wird. Eine Leitungsunterbrechung kann dann durch eine Veränderung der Offsetspannung bzw. des Konstantstroms festgestellt werden.

Problematisch ist dagegen der Test der Beschleunigungssensoren selbst. Um festzustellen, dass der Beschleunigungssensor noch funktioniert und ein Messsignal genau nach seiner Spezifikation liefert, ist es notwendig, ihn mit einem definierten Beschleunigungssignal zu beaufschlagen. Dazu muss der Beschleunigungssensor demontiert und dann auf einem kalibrierten Prüfstand (Shaker) montiert werden, was einen großen Aufwand vor dem Hintergrund darstellt, dass Beschleunigungssensoren oft in schwer zugänglichen Einbauräumen angeordnet sind, wie in Drehgestellen von Schienenfahrzeugen. Außerdem sind bei der De-und Rückmontage Beschädigungen am Sensor sowie Fehlmontagen nicht auszuschließen.

Eine andere Möglichkeit bieten Sensoren mit eigener Selbsttesteinrichtung. Dabei wird das Sensorelement durch eine zusätzliche integrierte Einrichtung angeregt. Falls der Sensor ein erwartetes Signal liefert, ist er intakt. Solche Selbsttesteinrichtungen werden beispielsweise bei Airbag-Sensoren in Kraftfahrzeugen eingesetzt. Eine solche Selbsttesteinrichtung ist jedoch nicht für jeden Sensortyp bzw. jede Sensorbaugröße verfügbar und verteuert den Sensor.

Um Sensortests an ausgebauten Sensoren bzw. Selbsttesteinrichtungen zu vermeiden, können Beschleunigungssensoren redundant vorgesehen und ein Ausfall oder eine Fehlfunktion eines Sensors durch einen Vergleich der beiden Sensorsignale auf Plausibilität festgestellt werden. Dies bedingt allerdings ebenfalls einen höheren technischen Aufwand und damit höhere Kosten.

Die Aufgabe der Erfindung besteht demgegenüber darin, eine Vorrichtung sowie ein Verfahren zur Fehlerüberwachung von Fahrwerkskomponenten von Schienenfahrzeugen derart weiter zu entwickeln, dass bei einfachem Aufbau die Funktion der verwendeten Beschleunigungssensoren kostengünstig überwacht werden kann.

Diese Aufgabe wird erfindungsgemäß durch die Merkmale von Anspruch 1 gelöst.

### Offenbarung der Erfindung

Erfindungsgemäß ist der Beschleunigungssensor derart ausgebildet, dass er ein Messsignal liefert, welches einen der Erdbeschleunigung g entsprechenden Signalanteil enthält oder ein der Erdbeschleunigung g entsprechendes Signal darstellt. Weiterhin umfasst die Auswerteeinrichtung eine Routine zur Funktionsüberprüfung des Beschleunigungssensors, welche ein Fehlersignal aussteuert, wenn das vom Beschleunigungssensor gelieferte Messsignal keinen der Erdbeschleunigung g entsprechenden Signalanteil enthält oder kein der Erdbeschleunigung g entsprechendes Signal darstellt und das Fehlersignal unterdrückt, wenn dies nicht der Fall ist.

Gemäß des erfindungsgemäßen Verfahrens wird folglich wenigstens ein Beschleunigungssensor verwendet, dessen Messsignal einen der Erdbeschleunigung g entsprechenden Signalanteil enthält oder ein der Erdbeschleunigung g entsprechendes Signal darstellt. Dieser Beschleunigungssensor wird am Fahrwerk des Schienenfahrzeugs derart angeordnet, dass seine Detektionsrichtung wenigstens eine Komponente parallel zur Hochachse (z-Richtung) des Schienenfahrzeugs aufweist, in welcher die Erdbeschleunigung g wirkt. Schließlich wird die Funktion des Beschleunigungssensors derart überprüft, dass ein Fehlersignal ausgesteuert wird, wenn das vom Beschleunigungssensor gelieferte Messsignal keinen der Erdbeschleunigung g entsprechenden Signalanteil enthält oder kein der Erdbeschleunigung g entsprechendes Signal darstellt und Unterdrücken des Fehlersignals, wenn dies nicht der Fall ist.

Die Bedingungen "kein der Erdbeschleunigung g entsprechender Signalanteil" bzw. "kein der Erdbeschleunigung g entsprechendes Signal" beinhalten Fälle, in denen zwar ein Signalanteil bzw. ein Signal vorhanden ist, welches von der Erdbeschleunigung herrührt, dessen Betrag oder Wert aber nicht dem Betrag oder Wert entspricht, welcher aufgrund der Erdbeschleunigung g zu erwarten wäre, mithin also Fälle, in denen der gemessene Wert für die Erdbeschleunigung gegenüber dem realen Wert zu groß oder zu klein ist. Denn eine solche Messabweichung deutet auf einen Fehler des Beschleunigungssensors hin.

Verglichen mit dem Stand der Technik sind für die erfindungsgemäße Vorrichtung keine zusätzliche Hardware oder ein Ausbau der Beschleunigungssensoren zum Test notwendig. Vielmehr liefert der zu überprüfende Beschleunigungssensor im Rahmen des bestimmungsgemäßen Messvorgangs selbst die Information über seine Funktionstüchtigkeit. An den überwachenden Beschleunigungssensor wird lediglich die Anforderung gestellt, dass er ein Messsignal erzeugt, das die stets auf ihn einwirkende Erdbeschleunigung g im Falle des fahrendes Schienenfahrzeugs beinhaltet oder bei ruhendem Schienenfahrzeug darstellt sowie eine Ansprechschwelle aufweist, welcher kleiner als die Erdbeschleunigung g ist.

Somit bildet das der Erdbeschleunigung g entsprechende Signal bzw. der diesem entsprechende Signalanteil ein Kalibrier- und Prüfsignal für den Beschleunigungssensor. Besonders gut eignet sich die Erfindung für Beschleunigungssensoren, die einen Messbereich in der Größenordnung der Erdbeschleunigung g aufweisen. Bei einer Instabilitätsdetektion erfolgt beispielsweise die Messung in einem Bereich von -2g bis +2g bei einer Ansprechschwelle von 0,8g. Selbst wenn das Kalibrier- und Prüfsignal gegenüber dem Messsignal um Größenordnungen abweichen sollte, so ist zumindest ein grundsätzlicher Test des Beschleunigungssensors möglich. Gegenüber den Maßnahmen des Stand der Technik bedeutet dies eine erhebliche Einsparung.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt umfasst die Vorrichtung Filtermittel, welche den der Erdbeschleunigung g entsprechenden Signalanteil des vom Beschleunigungssensor gelieferten Messsignals ausfiltern.

Gemäß einer Weiterbildung kann die Auswerteeinrichtung derart ausgebildet sein, dass die Testroutine einmal, in zeitlichen Abständen mehrmals oder permanent durchlaufen wird.

Besonders bevorzugt ist der Beschleunigungssensor ein piezoelektrischer, piezoresistiver oder ein kapazitiver Beschleunigungssensor.

Gemäß einer bevorzugten Maßnahme wird für verschiedene Funktionen der Fehlerüberwachung von Fahrwerkkomponenten von Schienenfahrzeugen wie den eingangs erläuterten Funktionen Instabilitätserkennung und Entgleisungsdetektion eine gemeinsame Sensorik benutzt. Die Beschleunigungssensoren können abhängig von ihrer erfindungsgemäßen Anordnung in Richtung der Hochachse des Schienenfahrzeugs (z-Richtung) und quer zur Fahrtrichtung (y-Richtung) oder in Fahrtrichtung (x-Richtung) Beschleunigungen detektieren. Hierbei sind bevorzugt zwei Varianten vorgesehen:
a) Anordnung wenigstens eines Beschleunigungssensors an einem Drehgestellrahmen oder an einem Radsatzlager einer Achse eines Drehgestells des Schienenfahrzeugs derart, dass seine Detektionsrichtung eine Komponente in Fahrtrichtung (x-Richtung) oder eine Komponente senkrecht zur Fahrtrichtung (y-Richtung) und zugleich eine Komponente parallel zur Hochachse (z-Richtung) des Schienenfahrzeugs aufweist,
b) Vorsehen von Radsatzlagem einer Achse zugeordneten Beschleunigungssensoren, von denen ein Beschleunigungssensor an dem einen Radsatzlager der Achse derart angeordnet ist, dass seine Detektionsrichtung parallel zur Fahrtrichtung ist und von denen ein anderer Beschleunigungssensor an dem anderen Radsatzlager der Achse derart angeordnet ist, dass seine Detektionsrichtung parallel zur Hochachse des Schienenfahrzeugs ist.

Bei der Variante a) ergibt sich auf Grund der schrägen Ausrichtung der Detektionsrichtung des Beschleunigungssensors eine vektorielle Addition der Beschleunigungswerte in z-Richtung mit denen der Quer- oder Längsbeschleunigung (y- und x-Richtung). Die gemessenen Beschleunigungswerte sind die Summe der vektoriellen Einzelbeschleunigung der z-Richtung und y-Richtung bzw. z-Richtung. Schon diese Werte bilden ein Maß für die Tendenz, dass das Fahrwerk einen instabilen Fahrzustand besitzt oder entgleist ist. Eine selektivere Überwachung kann zusätzlich durch eine frequenzspezifische Beurteilung der gemessenen Beschleunigungswerte erfolgen. Die Schwingungen auf den unterschiedlichen Raumachsen treten in unterschiedlichen Frequenzbändern auf. So sind bei einem instabilen Verhalten tendenziell niedrigere Frequenzen in der Quer- und Längsrichtung anzutreffen als in der Hochachse. Bei einer Entgleisung wird durch die höheren Frequenzanteile in der Hochachse ein Überwachungskriterium gebildet. Durch die gezielte Bewertung unterschiedlicher Frequenzbänder ist damit eine selektive Überwachung auf eine instabilen Fahrzustand und Entgleisung möglich.

Eine Komponente in den genannten Richtungen (X-, y- und z-Richtung) ist stets dann vorhanden, wenn sich der Winkel der Detektionsrichtung in der entsprechenden Ebene innerhalb eines Bereichs von 0 Grad bis 90 Grad befindet, ohne jedoch dessen Grenzen 0 Grad und 90 Grad einzuschließen. Besonders bevorzugt liegt der Winkel der Detektionsrichtung in einem Bereich von 10 bis 80 Grad.

Damit ist es möglich, mit nur einem einzigen Beschleunigungssensor jeweils zwei zueinander senkrechte Detektionsrichtungen zu erfassen (z- Richtung und y- Richtung bzw. z- Richtung und x-Richtung). Dadurch kann mit nur einem Beschleunigungssensor am Drehgestell oder an einer Achse durch die Überwachung der Quer- oder Längsbeschleunigung eine Aussage hinsichtlich einer möglichen Instabilität und durch die Überwachung der Beschleunigung in Richtung der Hochachse gleichzeitig eine Aussage hinsichtlich einer möglichen Entgleisungsneigung getroffen werden.

Mit lediglich einem einzigen Beschleunigungssensor je Drehgestell ist der Aufwand für Herstellung, Montage und Verkabelung des Beschleunigungssensors minimal.

Gemäß Variante b) wird jedem Radsatzlager einer Achse eines Drehgestells ein Beschleunigungssensor zugeordnet. Dabei sind die Detektionsrichtungen der beiden einer Achse beidseitig zugeordneten Beschleunigungssensor jeweils senkrecht zueinander, nämlich in Fahrtrichtung (x-Richtung) und in Richtung der Hochachse (z-Richtung). Damit können durch Auswertung der Beschleunigungssignale der Beschleunigungssensoren ebenfalls die Funktionen Entgleisungsdetektion und Instabilitätserkennung durchgeführt werden. Weil die Beschleunigungssensoren den Radsatzlagern zugeordnet sind, kann zugleich eine Achslagerüberwachung stattfinden, weil übermäßige Schwingungen im Bereich der Radsatzlager auf Defekte in diesem Bereich hindeuten.

An der anderen Achse des Drehgestells ist dieselbe Anordnung vorzugsweise seitenverkehrt bezogen auf die Detektionsrichtungen realisiert. So ergibt sich jeweils die gleiche Detektionsrichtung, betrachtet diagonal über die Achsen des Drehgestells. Damit sind je Drehgestell je zwei Beschleunigungssensoren mit jeweils gleicher Detektionsrichtung und somit Redundanzen für die jeweilige Detektionsrichtung vorhanden.

Neben den genannten Überwachungsfunktionen Instabilitätserkennung und Entgleisungsdetektion können mit der erfindungsgemäßen Vorrichtung durch geeignete Auswerteverfahren und einer entsprechenden Auswerteelektronik weitere Überwachungs- und Diagnosefunktionen realisiert werden. So ist bei Anordnung der Sensorik am Drehgestellrahmen eine Überwachung der unmittelbar am Rahmen angebauten Komponenten, wie Lenker, Führungsbuchsen bzw. des Rahmens selbst möglich.

Insbesondere bei einem Einbau der Beschleunigungssensoren direkt am Radsatzlager bzw. am Radsatzlagergehäuse sind zusätzliche Überwachungs-und Diagnosefunktionen denkbar, wie z.B. die Erkennung von Flachstellen, die Erkennung von Lagerschäden oder auch die Detektion von Schäden in der Radsatzwelle und im oder am Rad selbst.

Besonders bevorzugt liegt gemäß Variante a) die Detektionsrichtung des Beschleunigungssensors in einer Ebene senkrecht zu einer Achse des Drehgestells und weist in Bezug zur Hochachse (z-Richtung) sowie in Bezug zu einer parallel zur Fahrtrichtung angeordneten Achse (x-Richtung) einen Winkel von 45 Grad auf. Weil die Komponenten dann jeweils gleich groß sind, ergeben sich bevorzugt gleichgewichtige Signale für die Längs- und Hochschwingungen des Drehgestells bzw. der Radsatzlager. Alternativ sind natürlich beliebige Winkel innerhalb eines Winkelbereichs von 0 Grad bis 90 Grad möglich.

Alternativ kann die Detektionsrichtung des Beschleunigungssensors in einer Ebene senkrecht zur Fahrtrichtung liegen und in Bezug zur Hochachse (z-Richtung) sowie in Bezug zu einer senkrecht zur Fahrtrichtung angeordneten Achse (y-Richtung) einen Winkel von 45 Grad aufweisen. In diesem Fall ergeben sich gleichgewichtige Signale für die Quer- und Hochschwingungen des Drehgestells bzw. der Radsatzlager.

Besonders bevorzugt ist gemäß einer Weiterbildung von Variante a) an nur jeweils einem Radsatzlager der beiden Radsatzlager einer Achse ein Beschleunigungssensor angeordnet. Wenn die Detektionsrichtung dieses Beschleunigungssensors in einer Ebene senkrecht zur Achse liegt und in Bezug zur Hochachse sowie in Bezug zu einer parallel zur Fahrtrichtung angeordneten Achse vorzugsweise einen Winkel von 45 Grad einnimmt, ist es ebenfalls möglich, aus dem Messsignal des Beschleunigungssensors gleichgewichtige Aussagen zur Entgleisungsneigung und zum Stabilitätsverhalten des Fahrwerks zu machen. Werden beispielsweise zwei solcher Beschleunigungssensoren diagonal zu einer vertikalen Drehachse des Drehgestells angeordnet, ergibt sich zusätzlich eine redundante Messung. Dies erhöht die Sicherheit der Überwachungsvorrichtung.

Vorzugsweise wird bei dieser Variante der Beschleunigungssensor mit einem Impulsgeber kombiniert. Die Verwendung von integrierten Sensoren, welche die Signale für die elektronische Überwachungseinheit liefern und zusätzlich die Achsdrehzahlen z.B. für einen Gleitschutz erfassen, reduziert nochmals den Aufwand für den Sensoreinbau und für die Verkabelung.

Um den Aufwand an Herstell- und Montagekosten sowie hinsichtlich der Verkabelung zu minimieren, ist gemäß einer Weiterbildung von Variante b) je Radsatzlager einer Achse nur ein einziger Beschleunigungssensor vorgesehen. Diese Beschleunigungssensoren sind bevorzugt derart an den Radsatzlagem der Achsen des Drehgestells angeordnet, dass sich in Fahrtrichtung gesehen die Detektionsrichtungen der Beschleunigungssensoren auf jeder Fahrzeugseite abwechseln. Bezogen auf die vertikale Drehachse des Drehgestells sind Beschleunigungssensoren mit gleicher Detektionsrichtung folglich diagonal angeordnet. Dadurch ergibt sich in eine vorteilhafte Redundanz, was die Ausfallsicherheit der Überwachungsvorrichtung erhöht.

Vorzugsweise wird auch bei dieser Variante wenigstens ein Beschleunigungssensor mit einem Impulsgeber kombiniert, was die bereits oben erwähnten Vorteile mit sich bringt. Zusätzlich kann auch ein Temperatursensor zur Messung der momentanen Lagertemperatur in einem Radsatzlager in dem Kombinationssensor integriert sein. Bezüglich einer Möglichkeit des Aufbaus eines solchen Kombinationssensors wird auf die DE 10 2005 010 118 verwiesen.

Nicht zuletzt kann wenigstens eine elektronische Auswerteeinheit der Vorrichtung zur Fehlerüberwachung von Fahrwerkskomponenten integraler Bestandteil eines Gleitschutz- und/oder Bremssteuersystems des Schienenfahrzeugs sein, wie ebenfalls in der DE 10 2005 010 118 beschrieben wird.

Die oben beschriebenen Maßnahmen resultieren folglich in einem geringen Montageaufwand für die Beschleunigungssensoren, von welchen einige eine Detektionsrichtung mit einer Komponente parallel zur Hochachse (z-Richtung) des Schienenfahrzeugs aufweisen. Für diese Fälle ergibt sich in Kombination mit den Merkmalen von Patentanspruch 1 eine Vorrichtung zur Fehlerüberwachung von Fahrwerkskomponenten von Schienenfahrzeugen mit einer vorteilhaft geringen Anzahl von Beschleunigungssensoren und Auswerteeinrichtungen aufgrund der speziellen Anordnung der Beschleunigungssensoren, welche darüber hinaus durch die gezielte Auswahl des Senortyps sowie durch Vorsehen einer speziellen Auswertungssoftware auch auf einfache Weise zu überwachen sind, ohne dass sie hierzu ausgebaut werden müssten oder mit einer zusätzlichen Hardware zu versehen wären. Insgesamt erhält man folglich eine sehr kostengünstige und einfach zu überprüfende Vorrichtung zur Fehlerüberwachung von Fahrwerkskomponenten von Schienenfahrzeugen

Genaueres geht aus der folgenden Beschreibung von Ausführungsbeispielen hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: eine schematische Draufsicht auf ein Drehgestell mit einem Teil ei- ner Vorrichtung zur Fehlerüberwachung von Fahrwerkskomponenten von Schienenfahrzeugen gemäß einer ersten Ausführungsform der Erfindung;
- Fig.2: eine schematische Stirnansicht des Drehgestells von Fig.1;
- Fig.3: eine schematische Draufsicht auf ein Drehgestell mit einem Teil ei- ner Vorrichtung zur Fehlerüberwachung von Fahrwerkskomponenten von Schienenfahrzeugen gemäß einer weiteren Ausführungsform der Erfindung;
- Fig.4: eine schematische Seitenansicht des Drehgestells von Fig.3;
- Fig.5: eine schematische Draufsicht auf ein Drehgestell mit einem Teil ei- ner Vorrichtung zur Fehlerüberwachung von Fahrwerkskomponenten von Schienenfahrzeugen gemäß einer weiteren Ausführungsform der Erfindung;
- Fig.6: eine schematische Seitenansicht des Drehgestells von Fig.5;
- Fig.7: einen schematischen Schaltplan einer Vorrichtung zur Fehlerüber- wachung von Fahrwerkskomponenten von Schienenfahrzeugen ge- mäß der Ausführungsform von Fig.5 und Fig.6;
- Fig.8: eine schematische Darstellung eines Funktionsplans einer Vorrich- tung zur Fehlerüberwachung von Fahrwerkskomponenten von Schienenfahrzeugen.

### Beschreibung der Ausführungsbeispiele

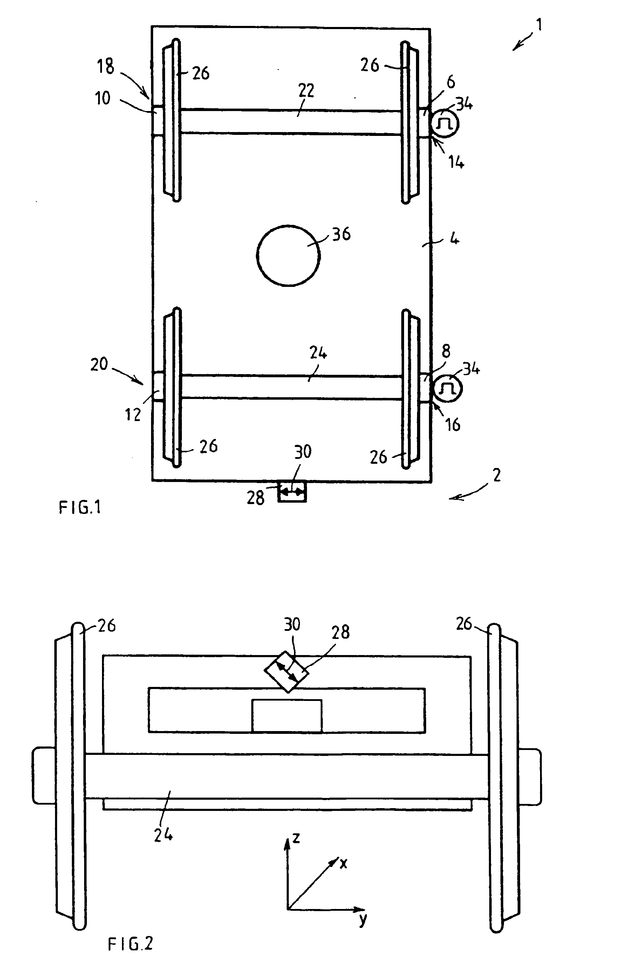

In Fig.1 ist eine schematische Draufsicht auf ein Drehgestell 1 mit einem Teil einer Vorrichtung 2 zur Fehlerüberwachung von Fahrwerkskomponenten von Schienenfahrzeugen gemäß einer ersten Ausführungsform der Erfindung dargestellt.

Das Drehgestell 1 ist in Bezug auf einen nicht dargestellten Wagenkasten um eine vertikale Drehachse 36 drehbar angeordnet und beinhaltet einen Drehgestellrahmen 4, welcher mittels eines ebenfalls nicht gezeigten, weil für die Erfindung unerheblichen sekundären Federungssystems an einem Wagenkasten des Schienenfahrzeugs abgestützt ist.

Der Drehgestellrahmen 4 stützt sich andererseits über eine Primärfederung an vier Radsatzlagergehäusen 6, 8, 10, 12 ab, in welchen je ein Radsatzlager 14, 16, 18 und 20 zur Lagerung einer Achse 22, 24 aufgenommen ist, welche endseitig zwei Räder 26 trägt. Insgesamt sind zwei Achsen 22, 24 je Drehgestell 1 vorhanden.

Zur Überwachung des Drehgestells 1 und seiner Komponenten 4 bis 20 ist die Vorrichtung 2 zur Fehlerübervvachung vorgesehen, von welcher in Fig.1 und Fig.2 lediglich ein Schwingungsaufnehmer 28 zu sehen ist.

Der Schwingungsaufnehmer 28 ist an dem Drehgestellrahmen 4 des Drehgestells derart angeordnet, dass seine durch einen Pfeil 30 symbolisierte Detektionsrichtung eine Komponente parallel zur Hochachse (z-Richtung) und eine Komponente in Fahrtrichtung (x-Richtung) oder eine Komponente senkrecht zur Fahrtrichtung (y-Richtung) des Schienenfahrzeugs aufweist. Bevorzugt weist die Detektionsrichtung 30 des beispielsweise als Beschleunigungssensor ausgebildeten Schwingungsaufnehmers 28 eine Komponente senkrecht zur Fahrtrichtung (y-Richtung) und zugleich eine Komponente parallel zur Hochachse (z-Richtung) des Schienenfahrzeugs auf, wie insbesondere aus Fig.2 hervorgeht.

Dann ergibt sich auf Grund der schrägen Ausrichtung der Detektionsrichtung 30 des Schwingungsaufnehmers 28 eine vektorielle Addition der Beschleunigungswerte in z-Richtung mit denen der y-Richtung (Querbeschleunigung). Die Resultierende bildet ein Maß für die Tendenz des Drehgestells zu entgleisen (Komponente der z-Richtung) und/oder instabile Fahrzustände wie übermäßiges Schlingem (Komponente der y- Richtung) einzunehmen.

Weiterhin ist jeder Achse 22, 24 ein bekannter Impulsgeber 34 zur Drehzahlmessung zugeordnet, welcher vorzugsweise in dem zugeordneten Radsatzlagergehäuse 6, 8 angeordnet oder mit eigenem Gehäuse an ein solches angeflanscht ist.

Besonders bevorzugt liegt gemäß der Ausführungsform von Fig.1 und Fig.2 die Detektionsrichtung 30 des Schwingungsaufnehmers 28 in einer Ebene senkrecht zur Fahrtrichtung (x-Richtung) und weist in Bezug zur Hochachse (z-Richtung) sowie in Bezug zu einer parallel zur Fahrtrichtung angeordneten Achse (y-Richtung) einen Winkel von vorzugsweise 45 Grad auf. Weil die Komponenten in Richtung dieser Achsen dann jeweils gleich groß sind, ergeben sich bevorzugt gleichgewichtige Signale für die Quer- und Hochschwingungen des Drehgestells 1.

Alternativ kann die Detektionsrichtung 30 des Schwingungsaufnehmers 28 in einer Ebene senkrecht zu einer Achse 22, 24 des Drehgestells liegen und in Bezug zur Hochachse (z-Richtung) sowie in Bezug zur Fahrtrichtung (x-Richtung) einen Winkel von vorzugsweise 45 Grad aufweisen. In diesem Fall ergeben sich gleichgewichtige Signale für die Längs- und Hochschwingungen des Drehgestells 1.

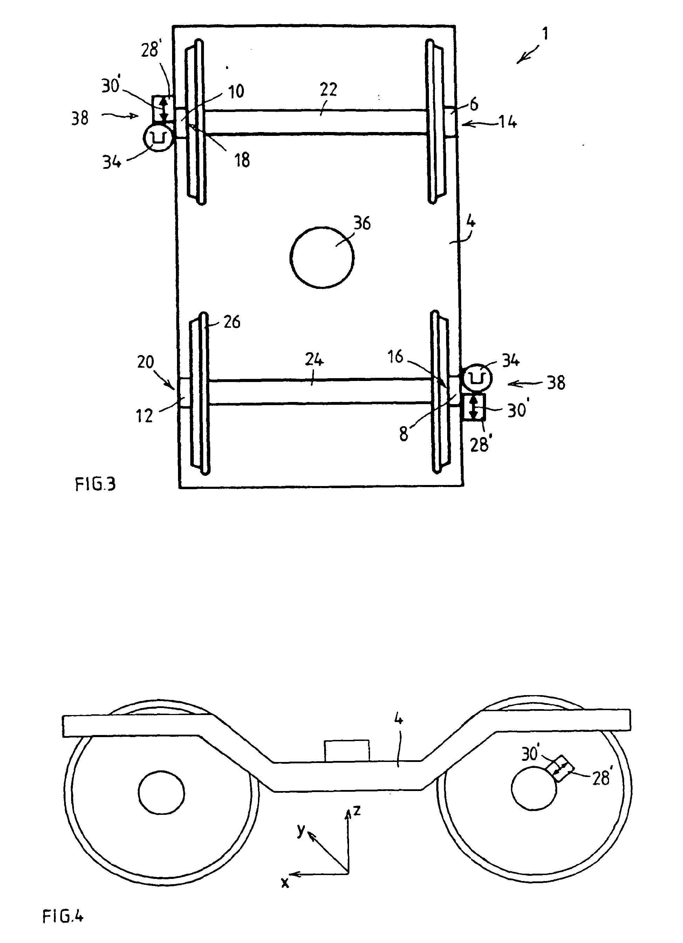

Gemäß der Ausführungsform von Fig.3 und Fig.4 ist an nur jeweils einem Radsatzlager 16, 18 der beiden Radsatzlager 16 und 20 bzw. 14 und 18 einer Achse 22, 24 ein Schwingungsaufnehmer 28' angeordnet. Wenn die Detektionsrichtungen 30' der beiden Schwingungsaufnehmer 28' gleich gerichtet sind und in einer Ebene senkrecht zu den Achsen 22, 24 des Drehgestells 1 liegen und in Bezug zur Hochachse (z-Richtung) sowie in Bezug zu einer parallel zur Fahrtrichtung angeordneten Achse (x-Richtung) vorzugsweise einen Winkel von 45 Grad aufweisen, ist es möglich, aus den Messsignalen der Schwingungsaufnehmer 28' gleichgewichtige Aussagen zur Entgleisungsneigung und zum Stabilitätsverhalten des Fahrwerks zu machen. Besonders bevorzugt werden, wie in Fig.3 gezeigt, die beiden den Achsen 22, 24 zugeordneten Schwingungsaufnehmer 28' diagonal zur vertikalen Drehachse 36 des Drehgestells 1 angeordnet. Bei dieser Ausführungsform werden die Schwingungsaufnehmer 28' zusätzlich mit jeweils einem Impulsgeber 34 zur Radgeschwindigkeitsmessung zu einem integrierten Kombinationssensor 38 zusammengefasst.

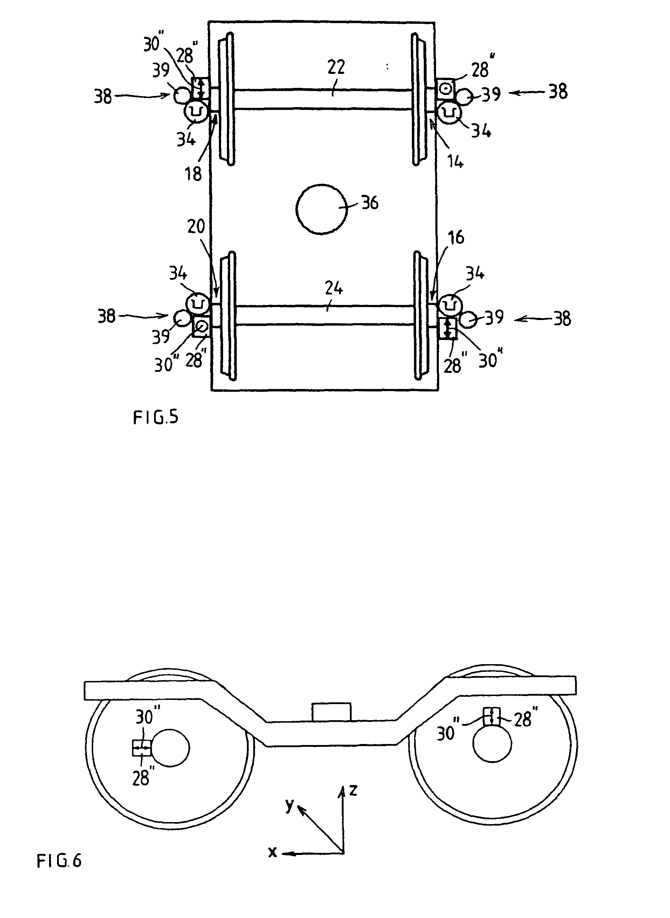

Bei der Ausführungsform von Fig.5 und Fig.6 ist jedem Radsatzlager 14 bis 20 des Drehgestells 1 ein Schwingungsaufnehmer 28" zugeordnet, wobei der Schwingungsaufnehmer 28" an dem einem Radsatzlager 16 bzw. 18 der jeweiligen Achse 24, 22 derart angeordnet ist, dass seine Detektionsrichtung 30" parallel zur Fahrtrichtung (x-Richtung) ist und von denen der andere Schwingungsaufnehmer 28" an dem anderen Radsatzlager 14 bzw. 20 der jeweiligen Achse 22, 24 derart angeordnet ist, dass seine Detektionsrichtung 30" parallel zur Hochachse (z-Richtung) des Schienenfahrzeugs ist. Demgemäß sind die Detektionsrichtungen 30" der beiden der jeweiligen Achse 22, 24 des Drehgestells 1 zugeordneten Schwingungsaufnehmer 28" jeweils senkrecht zueinander und weisen in Fahrtrichtung (x-Richtung) und in Richtung der Hochachse (z-Richtung). Bevorzugt sind daher Schwingungsaufnehmer 28" mit gleicher Detektionsrichtung 30" in Bezug zur Drehachse 36 des Drehgestells 1 diagonal angeordnet.

Vorzugsweise wird auch bei dieser Variante wenigstens ein Schwingungsaufnehmer 28" mit einem Impulsgeber 34 in einem Kombinationssensor 38 kombiniert, was die bereits oben erwähnten Vorteile mit sich bringt. Zusätzlich kann auch ein Temperatursensor 39 zur Messung der momentanen Lagertemperatur in dem jeweiligen Radsatzlager 14 bis 20 in dem Kombinationssensor 38 integriert sein.

Bei allen Ausführungsformen werden bevorzugt nur einfache, d.h. nur in einer Detektionsrichtung 30, 30' und 30" wirksame Schwingungsaufnehmer 28, 28', 28" gleichen Typs verwendet.

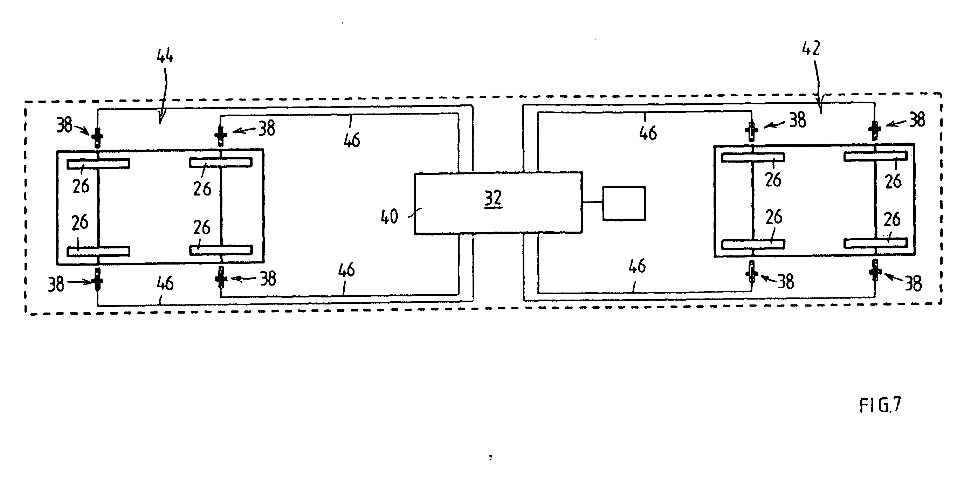

Fig. 7 zeigt die Auswerteelektronik 32 der Vorrichtung 2 in eine Gleitschutzelektronik 40 eines Gleitschutzsystems zum Einstellen eines optimalen Schlupfes zwischen den Rädern eines Reisezugwagens mit zwei Drehgestellen 42, 44 und den Schienen für eine Geschwindigkeit bis 200 km/h integriert, welche über Sensorleitungen 46 mit den jeweiligen Kombinationssensoren 38 an den Radsatzlagern in signalübertragender Verbindung steht. Der Reisezugwagen ist vorzugsweise pro Radsatzlager mit einem Kombinationssensor 38 zur Messung der Radgeschwindigkeit (Impulsgeber), der Radlagertemperatur (Temperatursensor) und der Radbeschleunigung in der jeweiligen Detektionsrichtung 30" (einfacher Beschleunigungsaufnehmer) ausgerüstet. Die Messsignale dieser Sensoren 38 werden in die zentrale Auswerteelektronik 32 eingelesen und dort ausgewertet. Insgesamt können mit Hilfe der Kombinationssensoren 38 folgende Überwachungsfunktionen realisiert werden:
- Rollübenrvachung (Erkennung von nicht drehenden Rädern),
- Warm- und Heißläuferdetektion (Temperaturüberwachung der Radsatzlager),
- Lagerschadenerkennung durch Schwingungsmessung,
- Erkennung von instabilem Lauf bzw. von defekten Dämpfern im Fahrwerk,
- Entgleisungsdetektion,
- Detektion von Flachstellen und unrunden Rädern,

Darüber hinaus sind zusätzliche Diagnosefunktionen zur frühzeitigen Erkennung defekter Bauteile möglich. Nicht zuletzt ist auch eine Diagnose der Schienenstrecke in Hinblick auf Gleisschäden denkbar. Über eine Eingabe-AusgabeEinrichtung 48 kann dann ein Einlesen bzw. Auslesen oder eine Anzeige von Daten erfolgen.

Die in obigen Ausführungsformen beschriebenen Beschleunigungssensoren 28, 28', 28", deren Detektionsrichtung 30, 30', 30" wenigstens eine Komponente parallel zur Hochachse (z-Richtung) des Schienenfahrzeugs aufweist, in welcher die Erdbeschleunigung g wirkt, sind derart ausgebildet, dass sie ein Messsignal liefern, welches einen der Erdbeschleunigung g entsprechenden Signalanteil enthält oder ein der Erdbeschleunigung g entsprechendes Signal darstellt. Weiterhin umfasst die Auswerteelektronik 32 eine Routine zur Funktionsüberprüfung der Beschleunigungssensoren 28, 28', 28" auf, welche ein Fehlersignal aussteuert, wenn das vom jeweiligen Beschleunigungssensor 28, 28', 28" gelieferte Messsignal keinen der Erdbeschleunigung g entsprechenden Signalanteil enthält oder kein der Erdbeschleunigung g entsprechendes Signal darstellt. Das Fehlersignal wird hingegen unterdrückt, wenn dies nicht der Fall ist.

Folglich werden in den beschriebenen Anwendungen Beschleunigungssensoren 28, 28', 28" verwendet, deren Messsignal einen der Erdbeschleunigung g entsprechenden Signalanteil enthält oder ein der Erdbeschleunigung g entsprechendes Signal darstellt. Piezoelektrische, piezoresistive oder kapazitive Beschleunigungssensoren 28, 28', 28" erfüllen in der Regel diese Bedingung. Diese Beschleunigungssensoren 28, 28', 28" werden wie beschrieben am Fahrwerk des Schienenfahrzeugs derart angeordnet, dass ihre Detektionsrichtung 30, 30', 30" wenigstens eine Komponente parallel zur Hochachse (z-Richtung) des Schienenfahrzeugs aufweist, in welcher die Erdbeschleunigung g wirkt.

Schließlich wird die Funktion dieser Beschleunigungssensoren 28, 28', 28" überprüft, indem ein Fehlersignal ausgesteuert wird, wenn das vom jeweiligen Beschleunigungssensor 28, 28', 28" gelieferte Messsignal keinen der Erdbeschleunigung g entsprechenden Signalanteil enthält oder kein der Erdbeschleunigung g entsprechendes Signal darstellt und das Fehlersignal unterdrückt, wenn dies nicht der Fall ist. Dabei kann diese Testroutine einmal, in zeitlichen Abständen mehrmals hintereinander oder permanent durchlaufen werden.

Dann liefert der zu überprüfende Beschleunigungssensor 28, 28', 28" selbst im Rahmen eines bestimmungsgemäßen Messvorgangs die Information über seine Funktionstüchtigkeit. An den überwachenden Beschleunigungssensor 28, 28', 28" wird lediglich die Anforderung gestellt, dass er ein Messsignal erzeugen kann, dass die stets auf ihn einwirkende statische Erdbeschleunigung g im Falle des fahrendes Schienenfahrzeugs beinhaltet oder bei ruhendem Schienenfahrzeug darstellt sowie eine Ansprechschwelle aufweist, welcher kleiner als die Erdbeschleunigung g ist.

Besonders bevorzugt umfasst die Vorrichtung 2 nicht gezeigte Filtermittel, welche den der Erdbeschleunigung g entsprechenden Signalanteil des vom Beschleunigungssensor 28, 28', 28" gelieferten Messsignals ausfiltern.

### Bezugszeichenliste

- 1: Drehgestell
- 2: Vorrichtung
- 4: Drehgestellrahmen
- 6: Radsatzlagergehäuse
- 8: Radsatzlagergehäuse
- 10: Radsatzlagergehäuse
- 12: Radsatzlagergehäuse
- 14: Radsatzlager
- 16: Radsatzlager
- 18: Radsatzlager
- 20: Radsatzlager
- 22: Achse
- 24: Achse
- 26: Räder
- 28, 28', 28": Schwingungsaufnehmer
- 30, 30', 30": Detektionsrichtung
- 32: Auswerteelektronik
- 34: Impulsgeber
- 36: Drehachse
- 38: Kombinationsensor
- 39: Temperatursensor
- 40: Gleitschutzelektronik
- 42: Drehgestell
- 44: Drehgestell
- 46: Sensorleitungen
- 48: Eingabe/Ausgabeeinrichtung

## Patentansprüche

1. Fahrwerk eines Schienenfahrzeugs mit einer Vorrichtung (2) zur Fehlerüberwachung von Fahrwerkskomponenten, beinhaltend wenigstens einen mit einer Auswerteeinrichtung (32) zusammenwirkenden Beschleunigungssensor (28, 28', 28"), wobei wenigstens ein Beschleunigungssensor (28, 28', 28") derart am Fahrwerk angeordnet ist, dass seine Detektionsrichtung (30, 30', 30") wenigstens eine Komponente parallel zur Hochachse (z-Richtung) des Schienenfahrzeugs aufweist, **dadurch gekennzeichnet, dass** der Beschleunigungssensor (28, 28', 28") derart ausgebildet ist, dass er ein Messsignal liefert, welches einen der Erdbeschleunigung (g) entsprechenden Signalanteil enthält oder ein der Erdbeschleunigung (g) entsprechendes Signal darstellt und dass die Auswerteeinrichtung (32) eine Routine zur Funktionsüberprüfung des Beschleunigungssensors (28, 28', 28") umfasst, welche ein Fehlersignal aussteuert, wenn das vom Beschleunigungssensor (28, 28', 28") gelieferte Messsignal keinen der Erdbeschleunigung (g) entsprechenden Signalanteil enthält oder kein der Erdbeschleunigung (g) entsprechendes Signal darstellt und das Fehlersignal unterdrückt, wenn dies nicht der Fall ist.

2. Fahrwerk nach Anspruch 1, **dadurch gekennzeichnet, dass** das vom Beschleunigungssensor (28, 28', 28") gelieferte Messsignal bei ruhendem Schienenfahrzeug das der Erdbeschleunigung (g) entsprechende Signal darstellt und bei fahrendem Schienenfahrzeug den der Erdbeschleunigung entsprechenden Signalanteil enthält.

3. Fahrwerk nach Anspruch 2, **dadurch gekennzeichnet, dass** Filtermittel vorhanden sind, welche den der Erdbeschleunigung (g) entsprechenden Signalanteil des vom Beschleunigungssensor (28, 28', 28") gelieferten Messsignals ausfiltern.

4. Fahrwerk nach wenigstens einem der vorhergehenden Ansprüche, **dadurch gekennzeichnet, dass** die Auswerteeinrichtung (32) derart ausgebildet ist, dass die Testroutine einmal, in zeitlichen Abständen mehrmals oder permanent durchlaufen wird.

5. Fahrwerk nach wenigstens einem der vorhergehenden Ansprüche, **dadurch gekennzeichnet, dass** der Beschleunigungssensor (28, 28', 28") ein piezoelektrischer, piezoresistiver oder ein kapazitiver Beschleunigungssensor ist.

6. Fahrwerk nach wenigstens einem der vorhergehenden Ansprüche, **dadurch gekennzeichnet, dass**
a) wenigstens ein Beschleunigungssensor (28, 28') derart an einem Drehgestellrahmen (4) oder an einem Radsatzlager (14 bis 20) einer Achse (22, 24) eines Drehgestells (1) des Schienenfahrzeugs angeordnet ist, dass seine Detektionsrichtung (30, 30') eine Komponente in Fahrtrichtung (x-Richtung) oder eine Komponente senkrecht zur Fahrtrichtung (y-Richtung) und zugleich eine Komponente parallel zur Hochachse (z-Richtung) des Schienenfahrzeugs aufweist, oder dass
b) Radsatzlagern (14 bis 20) einer Achse (22, 24) zugeordnete Beschleunigungssensor (28") vorgesehen sind, von denen ein Beschleunigungssensor (28") an dem einem Radsatzlager (16 bzw. 18) der Achse (24, 22) derart angeordnet ist, dass seine Detektionsrichtung (30") parallel zur Fahrtrichtung (x-Richtung) ist und von denen ein anderer Beschleunigungssensor (28") an dem anderen Radsatzlager (14 bzw. 20) der Achse (22, 24) derart angeordnet ist, dass seine Detektionsrichtung (30") parallel zur Hochachse (z-Richtung) des Schienenfahrzeugs ist.

7. Fahrwerk nach Anspruch 6, **dadurch gekennzeichnet, dass** ein einziger Beschleunigungssensor (28) am Drehgestellrahmen (4) des Drehgestells (1) angeordnet ist.

8. Fahrwerk nach Anspruch 7, **dadurch gekennzeichnet, dass** die Detektionsrichtung (30) des Beschleunigungssensors (28) in einer Ebene senkrecht zu einer Achse (22, 24) des Drehgestells (1) liegt und in Bezug zur Hochachse (z-Richtung) sowie in Bezug zu einer parallel zur Fahrtrichtung angeordneten Achse (x-Richtung) einen Winkel von 45 Grad aufweist.

9. Fahrwerk nach Anspruch 7, **dadurch gekennzeichnet, dass** die Detektionsrichtung (30) des Beschleunigungssensors (28) in einer Ebene senkrecht zur Fahrtrichtung (x-Richtung) liegt und in Bezug zur Hochachse (z-Richtung) sowie in Bezug zu einer senkrecht zur Fahrtrichtung angeordneten Achse (y-Richtung) einen Winkel von 45 Grad aufweist.

10. Fahrwerk nach Anspruch 6, **dadurch gekennzeichnet, dass** an jeweils nur einem Radsatzlager (16, 18) der Radsatzlager (14 bis 20) einer Achse (22, 24) des Drehgestells (1) ein Beschleunigungssensor (28') angeordnet ist.

11. Fahrwerk nach Anspruch 10, **dadurch gekennzeichnet, dass** die Detektionsrichtung (30') des Beschleunigungssensors (28') in einer Ebene senkrecht zur Achse (22, 24) liegt und in Bezug zur Hochachse (z-Richtung) sowie in Bezug zu einer parallel zur Fahrtrichtung angeordneten Achse (x-Richtung) einen Winkel von 45 Grad aufweist.

12. Fahrwerk nach Anspruch 6, **dadurch gekennzeichnet, dass** je Radsatzlager (14 bis 20) einer Achse (22, 24) ein Beschleunigungssensor (28") vorgesehen ist.

13. Fahrwerk nach Anspruch 7, **dadurch gekennzeichnet, dass** die Beschleunigungssensor (28") derart an den Radsatzlagern (14 bis 20) der Achsen (22, 24) des Drehgestells (1) angeordnet sind, dass sich in Fahrtrichtung (x-Richtung) gesehen die Detektionsrichtungen (30") der Beschleunigungssensoren (28") auf jeder Fahrzeugseite abwechseln.

14. Fahrwerk nach wenigstens einem der vorhergehenden Ansprüche, **dadurch gekennzeichnet, dass** wenigstens ein Beschleunigungssensor (28, 28', 28") zusammen mit wenigstens einem Geschwindigkeitssensor (34) zur Messung der momentanen Radgeschwindigkeit und/ oder mit einem Temperatursensor (39) zur Messung der momentanen Lagertemperatur eines Radsatzlagers (14 bis 20) in einem Kombinationssensor (38) integriert ist.

15. Verfahren zur Fehlerüberwachung von Fahrwerkskomponenten von Schienenfahrzeugen, beinhaltend wenigstens folgende Schritte :
- Verwenden wenigstens eines Beschleunigungssensors (28, 28', 28"), dessen Messsignal einen der Erdbeschleunigung entsprechenden Signalanteil enthält oder ein der Erdbeschleunigung entsprechendes Signal darstellt,
- Anordnen des Beschleunigungssensors (28, 28', 28") am Fahrwerk des Schienenfahrzeugs derart, dass seine Detektionsrichtung (30, 30', 30") wenigstens eine Komponente parallel zur Hochachse (z-Richtung) des Schienenfahrzeugs aufweist,
- Überprüfen der Funktion des Beschleunigungssensors (28, 28', 28") derart, dass ein Fehlersignal ausgesteuert wird, wenn das vom Beschleunigungssensor (28, 28', 28") gelieferte Messsignal keinen der Erdbeschleunigung entsprechenden Signalanteil enthält oder kein der Erdbeschleunigung entsprechendes Signal darstellt und Unterdrücken des Fehlersignals, wenn dies nicht der Fall ist.

## Claims

1. Undercarriage of a rail vehicle with a device (2) for monitoring undercarriage components for faults, comprising at least one acceleration sensor (28, 28', 28") which interacts with an evaluation device (32), wherein at least one acceleration sensor (28, 28', 28") is arranged on the undercarriage in such a way that its detection direction (30, 30', 30") has at least one component parallel to the vertical axis (z-direction) of the rail vehicle, **characterised in that** the acceleration sensor (28, 28', 28") is designed such that that it supplies a measurement signal which contains a signal component which corresponds to the acceleration (g) due to gravity or constitutes a signal which corresponds to the acceleration (g) due to gravity, and **in that** the evaluation device (32) comprises a routine for checking the function of the acceleration sensor (28, 28', 28"), which routine modulates a fault signal if the measurement signal which is supplied by the acceleration sensor (28, 28', 28") does not contain a signal component which corresponds to the acceleration (g) due to gravity or does not constitute a signal which corresponds to the acceleration (g) due to gravity and suppresses the fault signal if this is not the case.

2. Running gear according to claim 1, **characterised in that** the measurement signal which is supplied by the acceleration sensor (28, 28', 28") when the rail vehicle is stationary constitutes the signal which corresponds to the acceleration (g) due to gravity, and the measurement signal which is supplied by the acceleration sensor (28, 28', 28") when the rail vehicle is travelling contains the signal component which corresponds to the acceleration due to gravity.

3. Running gear according to claim 2, **characterised in that** filter means are present which filter out the signal component which corresponds to the acceleration (g) due to gravity of the measurement signal which is supplied by the acceleration sensor (28, 28', 28").

4. Running gear according to one or more of the preceding claims, **characterised in that** the evaluation device (32) is designed such that the test routine is performed once, repeatedly at time intervals or continuously.

5. Running gear according to one or more of the preceding claims, **characterised in that** the acceleration sensor (28, 28', 28") is a piezoelectric, piezoresistive or capacitive acceleration sensor.

6. Running gear according to one or more of the preceding claims, **characterised in that**
a) at least one acceleration sensor (28, 28') is arranged on a bogie frame (4) or on a wheel set bearing (14 to 20) of an axle (22, 24) of a bogie (1) of the rail vehicle in such a way that its detection direction (30, 30') has a component in the direction of travel (x-direction) or a component perpendicular to the direction of travel (y-direction) and at the same time a component parallel to the vertical axis (z-direction) of the rail vehicle, or in that
b) acceleration sensors (28") which are assigned to wheel set bearings (14 to 20) of one axle (22, 24) are provided, one acceleration sensor (28") of which is arranged on the one wheel set bearing (16 or 18) of the axle (24, 22) in such a way that its detection direction (30") is parallel to the direction of travel (x-direction), and another acceleration sensor (28") of which is arranged on the other wheel set bearing (14 or 20) of the axle (22, 24) in such a way that its detection direction (30") is parallel to the vertical axis (z-direction) of the rail vehicle.

7. Running gear according to claim 6, **characterised in that** a single acceleration sensor (28) is arranged on the bogie frame (4) of the bogie (1).

8. Running gear according to claim 7, **characterised in that** the detection direction (30) of the acceleration sensor (28) is located in a plane perpendicular to an axle (22, 24) of the bogie (1), and encloses an angle of 45 degrees with the vertical axis (z-direction) and with an axis (x-direction) which is parallel to the direction of travel.

9. Running gear according to claim 7, **characterised in that** the detection direction (30) of the acceleration sensor (28) is located in a plane perpendicular to the direction of travel (x-direction) and encloses an angle of 45 degrees with the vertical axis (z-direction) and with an axis (y-direction) which is perpendicular to the direction of travel.

10. Running gear according to claim 6, **characterised in that** in each case an acceleration sensor (28') is arranged on just one wheel set bearing (16, 18) of the wheel set bearings (14 to 20) of an axle (22, 24) of the bogie (1).

11. Running gear according to claim 10, **characterised in that** the detection direction (30') of the acceleration sensor (28') is located in a plane perpendicular to the axle (22, 24) and encloses an angle of 45 degrees with the vertical axis (z-direction) and with an axis (x-direction) which is arranged parallel to the direction of travel.

12. Running gear according to claim 6, **characterised in that** an acceleration sensor (28") is provided for each wheel set bearing (14 to 20) of an axle (22, 24).

13. Running gear according to claim 7, **characterised in that** the acceleration sensors (28") are arranged on the wheel set bearings (14 to 20) of the axles (22, 24) of the bogie (1) in such a way that, viewed in the direction of travel (x-direction), the detection directions (30") of the acceleration sensors (28") on each side of the vehicle alternate.

14. Running gear according to one or more of the preceding claims, **characterised in that** at least one acceleration sensor (28, 28', 28") is integrated, together with at least one speed sensor (34) for measuring the instantaneous wheel speed and/or with a temperature sensor (39) for measuring the instantaneous bearing temperature of a wheel set bearing (14 to 20), in a combination sensor (38).

15. Method for monitoring undercarriage components of rail vehicles for faults, said method comprising at least the following steps:
- the use of at least one acceleration sensor (28, 28', 28") the measurement signal of which contains a signal component which corresponds to the acceleration due to gravity or constitutes a signal which corresponds to the acceleration due to gravity,
- the arrangement of the acceleration sensor (28, 28', 28") on the undercarriage of the rail vehicle in such a way that its detection direction (30, 30', 30") has at least one component parallel to the vertical axis (z-direction) of the rail vehicle,
- the checking of the function of the acceleration sensor (28, 28', 28") in such a way that a fault signal is modulated if the measurement signal which is supplied by the acceleration sensor (28, 28', 28") does not contain a signal component which corresponds to the acceleration due to gravity or does not constitute a signal which corresponds to the acceleration due to gravity, and the suppression of the fault signal if this is not the case.

## Revendications

1. Châssis d'un véhicule ferroviaire comprenant un dispositif (2) de contrôle de défaillance d'éléments du châssis, comportant au moins un capteur (28, 28', 28") d'accélération, coopérant avec un dispositif (32) d'exploitation, dans lequel au moins un capteur (28, 28', 28") d'accélération est monté sur le châssis de manière à ce que sa direction (30, 30', 30") de détection ait au moins une composante parallèle à l'axe vertical (direction z) du véhicule ferroviaire, **caractérisé en ce que** le capteur (28, 28', 28") d'accélération est constitué de manière à fournir un signal de mesure, qui contient une proportion de signal correspondant à l'accélération (g) de l'apesanteur ou représente un signal correspondant à l'accélération (g) de l'apesanteur et **en ce que** le dispositif (32) d'exploitation comprend un programme de contrôle du fonctionnement du capteur (28, 28', 28") d'accélération, qui émet un signal de défaillance lorsque le signal de mesure fourni par le capteur (28, 28', 28") d'accélération ne comporte pas de proportion de signal correspondant à l'accélération (g) de l'apesanteur ou ne représente pas de signal correspondant à l'accélération (g) de l'apesanteur et supprime le signal de défaillance lorsque cela n'est pas le cas.

2. Châssis suivant la revendication 1, **caractérisé en ce que** le signal de mesure fourni par le capteur (28, 28', 28") d'accélération représente, lorsque le véhicule ferroviaire est au repos, le signal correspondant à l'accélération (g) de l'apesanteur et contient, lorsque le véhicule ferroviaire roule, la proportion de signal correspondant à l'accélération de l'apesanteur.

3. Châssis suivant la revendication 2, **caractérisé en ce qu'**il y a des moyens de filtrage qui séparent par filtration la proportion du signal correspondant à l'accélération (g) de l'apesanteur du signal de mesure fourni par le capteur (28, 28', 28") d'accélération.

4. Châssis suivant au moins l'une des revendications précédentes, **caractérisé en ce que** le dispositif (32) d'exploitation est tel que le programme de test se déroule une fois, plusieurs fois à des intervalles de temps ou de façon permanente.

5. Châssis suivant au moins l'une des revendications précédentes, **caractérisé en ce que** capteur (28, 28', 28") d'accélération est un capteur d'accélération piézoélectrique, piézorésistif ou capacitif.

6. Châssis suivant au moins l'une des revendications précédentes, **caractérisé en ce que**
a) au moins un capteur (28, 28', 28") d'accélération est montée sur un châssis (4) de boggie ou sur une boîte (14 à 20) d'un essieu (22, 24) d'un boggie (1) du véhicule ferroviaire, de manière à ce que sa direction (30, 30') de détection ait une composante dans la (direction x) de la marche ou une composante perpendiculaire à la direction de la marche (direction y) et en même temps une composante parallèle à l'axe vertical (direction z) du véhicule ferroviaire ou **en ce que**
b) il est prévu des capteurs (28") d'accélération associés à des boîtes (14 à 20) d'un essieu (22, 24), parmi lesquels un capteur (28") d'accélération est monté sur une boîte (16) ou (18) de l'essieu (24, 22) de façon à ce que sa direction (30") de détection soit parallèle à la direction (direction x) de marche et dont un autre capteur (28") d'accélération est monté sur la boîte (14 ou 20) de l'essieu (22, 24) de manière à ce que sa direction (30") de détection soit parallèle à l'axe (direction z) vertical du véhicule ferroviaire.

7. Châssis suivant la revendication 6, **caractérisé en ce qu'**un seul capteur (28) d'accélération est monté sur le châssis (4) du boggie (1).

8. Châssis suivant la revendication 7, **caractérisé en ce que** la direction (30) de détection du capteur (28) d'accélération est dans un plan perpendiculaire à un axe (22, 24) du boggie (1) et fait un angle de 45° avec l'axe (direction z) vertical ainsi qu'avec un axe (direction x) parallèle à la direction de marche.

9. Châssis suivant la revendication 7, **caractérisé en ce que** la direction (30) de détection du capteur (28) d'accélération est dans un plan perpendiculaire à la direction, la direction (30) de détection du capteur (28) d'accélération est dans un plan perpendiculaire à la direction (direction x) de marche et fait un angle de 45° avec l'axe (direction z) vertical ainsi qu'avec un axe (direction y) perpendiculaire à la direction de marche.

10. Châssis suivant la revendication 6, **caractérisé en ce que** un capteur (28') d'accélération est monté sur respectivement seulement une boîte (16, 18) parmi les boîtes (14 à 20) d'un essieu (22, 24) du boggie (1).

11. Châssis suivant la revendication 10, **caractérisé en ce que** la direction (30') de détection du capteur (28") d'accélération se trouve dans un plan perpendiculaire à l'essieu (22, 24) et fait un angle de 45° avec l'axe (direction z) vertical ainsi qu'avec un axe (direction x) parallèle à la direction de marche.

12. Châssis suivant la revendication 6, **caractérisé en ce que** chaque boîte (14 à 20) d'un essieu (22, 24) comporte un capteur (28") d'accélération.

13. Châssis suivant la revendication 7, **caractérisé en ce que** les capteurs (28") d'accélération sont montés sur les boîtes (14 à 20) des essieux (22, 24) de boggie (1) de manière à ce que, vu dans la direction (direction x) de la marche, les directions (30") de détection des capteurs (28") d'accélération alternent de chaque côté du véhicule.

14. Châssis suivant au moins l'une des revendications précédentes, **caractérisé en ce qu'**au moins un capteur (28, 28', 28") d'accélération, ensemble avec au moins un capteur (34) de vitesse pour la mesure de la vitesse instantanée des roues et/ou avec un capteur (39) de température pour la mesure de la température instantanée d'une boîte (14 à 20), est intégré dans un capteur (38) de combinaison.

15. Procédé de contrôle de défaillance d'éléments de châssis de véhicules ferroviaires, comportant au moins les stades suivantes :
- on utilise au moins un capteur (28, 28', 28") d'accélération dont le signal de mesure contient une proportion de signal correspondant à l'accélération de l'apesanteur ou représente un signal correspondant à l'accélération de l'apesanteur,
- on met le capteur (28, 28', 28") d'accélération sur le châssis du véhicule ferroviaire de manière à ce que sa direction (30, 30', 30") de détection ait au moins une composante parallèle à l'axe (direction z) verticale du véhicule ferroviaire,
- on contrôle le fonctionnement du capteur (28, 28', 28") d'accélération par le fait qu'il est émis un signal de défaillance lorsque le signal de mesure fourni par le capteur (28, 28', 28") d'accélération ne contient pas de proportion de signal correspondant à l'accélération de l'apesanteur ou ne représente pas de signal correspondant à l'accélération de l'apesanteur et que le signal de défaillance est supprimé lorsque cela n'est pas le cas.
